(19) Europäisches Patentamt
European Patent Office
Office européen des brevets

(11) EP 4 610 311 A1

(12) EUROPEAN PATENT APPLICATION

(43) Date of publication:
**03.09.2025 Bulletin 2025/36**

(21) Application number: **24160425.5**

(22) Date of filing: **29.02.2024**

(51) International Patent Classification (IPC):
***C08L 67/02*** *(2006.01)*

(52) Cooperative Patent Classification (CPC):
(C-Sets available)
**C08L 67/02;** C08K 2003/222; C08K 2003/2227; C08L 2205/025; C08L 2205/035 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SHPP Global Technologies B.V.**
**4612 PX Bergen op Zoom (NL)**

(72) Inventors:
- **JOFORE, Bruke Daniel**
  **4612 PX Bergen op Zoom (NL)**
- **MERCX, Franciscus Petrus Maria**
  **4612 PX Bergen op Zoom (NL)**

(74) Representative: **Modiano, Gabriella Diana et al**
**Modiano & Partners SA**
**Steinsdorfstraße 14**
**80538 München (DE)**

# (54) HIGHLY FILLED PBT-BASED THERMALLY CONDUCTIVE AND ELECTRICALLY INSULATIVE COMPOSITIONS HAVING IMPROVED DUCTILITY AND CTI PROPERTIES

(57) Thermoplastic compositions include: (a) from about 10 wt% to about 40 wt% of a PBT (polybutylene terephthalate) component; (b) from about 5 wt% to less than 10 wt% of a glass fiber component; (c) from about 30 wt% to about 75 wt% of a mineral filler component including aluminum silicate, aluminum oxide, magnesium oxide, or a combination thereof; (d) from about 0.1 wt% to about 10 wt% of an impact modifier component including ethylene-ethyl acrylate copolymer (EEA) and ethylene-methyl acrylate-glycidyl methacrylate terpolymer (EMAGMA); and optionally a polycarbonate-siloxane copolymer component. The combined weight percent value of all components does not exceed 100 wt%, and all weight percent values are based on the total weight of the composition. The composition does not include a polycarbonate copolymer other than the optional polycarbonate-siloxane copolymer in element (e).

EP 4 610 311 A1

(52) Cooperative Patent Classification (CPC): (Cont.)

C-Sets
**C08L 67/02, C08L 67/02, C08L 23/0884,**
**C08L 67/025, C08L 23/0869, C08K 3/22,**
**C08K 7/14;**
**C08L 67/02, C08L 67/02, C08L 83/10,**
**C08L 23/0884, C08K 3/22, C08K 7/14**

## Description

### FIELD OF THE DISCLOSURE

The present disclosure relates to polybutylene terephthalate (PBT) thermoplastic compositions, and in particular to PBT compositions including an impact modifier component that have good ductility and Comparative Tracking Index (CTI) properties.

### BACKGROUND OF THE DISCLOSURE

There is a growing demand for polymer composites that are both thermally conductive and electrically insulating. Polymers are thermal and electrical insulators, so to satisfy these properties they may be formulated with high volume contents of thermally conductive fillers. High levels of fillers, however, can adversely affect other properties such as mechanical properties and processability, so formulations need to be optimized. Formulating PBT based compositions with optimized properties is a challenge.

In automotive applications such in radar housings and high voltage connectors, components are exposed to severe operating conditions, such as vibrational loadings, increased temperatures due to the use of multiple processors and other external forces during operation. Therefore, the parts in these applications should have good mechanical properties such as ductility, impact resistance, stiffness, and high thermal conductivity. Additionally, materials used in high-voltage charging systems (connectors, cables and insulating materials) should have a high Comparative Tracking Index (CTI).

These and other shortcomings are addressed by aspects of the present disclosure.

### SUMMARY

Aspects of the disclosure relate to thermoplastic compositions including: (a) from about 10 wt% to about 40 wt% of a PBT (polybutylene terephthalate) component; (b) from about 5 wt% to less than 10 wt% of a glass fiber component; (c) from about 30 wt% to about 75 wt% of a mineral filler component including aluminum silicate, aluminum oxide, magnesium oxide, or a combination thereof; (d) from about 0.1 wt% to about 10 wt% of an impact modifier component including ethylene-ethyl acrylate copolymer (EEA) and ethylene-methyl acrylate-glycidyl methacrylate terpolymer (EMAGMA); and optionally a polycarbonate-siloxane copolymer component. The combined weight percent value of all components does not exceed 100 wt%, and all weight percent values are based on the total weight of the composition. The composition does not include a polycarbonate copolymer other than the optional polycarbonate-siloxane copolymer in element (e).

### DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs.

In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a PBT component" includes mixtures of two or more PBT polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are

defined by the formula:

$$M_w = \frac{\sum N_i M_i^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

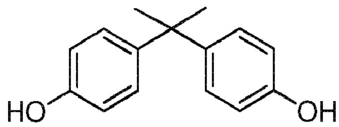

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to thermoplastic compositions including: (a) from about 10 wt% to about 40 wt% of a PBT (polybutylene terephthalate) component; (b) from about 5 wt% to less than 10 wt% of a glass fiber component; (c) from about 30 wt% to about 75 wt% of a mineral filler component including aluminum silicate, aluminum oxide, magnesium oxide, or a combination thereof; (d) from about 0.1 wt% to about 10 wt% of an impact modifier component including ethylene-ethyl acrylate copolymer (EEA) and ethylene-methyl acrylate-glycidyl methacrylate terpolymer (EMAGMA); and optionally a polycarbonate-siloxane copolymer component. The combined weight percent value of all components does not exceed 100 wt%, and all weight percent values are based on the total weight of the composition. The composition does

not include a polycarbonate copolymer other than the optional polycarbonate-siloxane copolymer in element (e).

As used herein, "polybutylene terephthalate" is a polyester that can be used interchangeably with poly(1,4-butylene terephthalate). Polybutylene terephthalate is one type of polyester. The PBT component may include PBT homopolymers, PBT copolymers, or a combination thereof.

In specific aspects, the polymer component is a chemical recycled poly(butylene terephthalate), named as iQ PBT, derived from a chemical upcycled (or post-consumer recycled) PET. Fibers formed from iQ PBT provide an environmentally friendly advantage that provide desirable elastic modulus, stress at break, and elongation at break.

Commercial examples of an upcycled PBT include those available under the trade name ELCRIN™ iQ Resin, manufactured by SABIC™. The PBT may be derived from the poly(ethylene terephthalate) component by any method that involves depolymerization of the poly(ethylene terephthalate) component and polymerization of the depolymerized poly(ethylene terephthalate) component with 1,4 butanediol to provide the PET-derived PBT. For example, the PET-derived poly(butylene terephthalate) component may be made by a process that involves depolymerizing a poly(ethylene terephthalate) and/or a poly(ethylene terephthalate) copolymer, with a 1,4 butanediol component at a temperature from 180 °C to 230 °C, under agitation, at a pressure that is at least atmospheric pressure in the presence of a catalyst component, at an elevated temperature, under an inert atmosphere, to produce a molten mixture containing an oligomer containing ethylene terephthalate moieties, an oligomer containing ethylene isophthalate moieties, an oligomer containing diethylene terephthalate moieties, an oligomer containing diethylene isophthalate moieties, an oligomer containing butylene terephthalate moieties, an oligomer containing butylene isophthalate moieties, a covalently bonded oligomeric moiety containing at least two of the foregoing moieties, 1,4 butanediol, ethylene glycol, or a combination thereof; and agitating the molten mixture at sub-atmospheric pressure and increasing the temperature of the molten mixture to an elevated temperature under conditions sufficient to form a PET-derived PBT containing at least one residue derived from the poly(ethylene terephthalate) component.

In certain aspects the PBT component includes a high flow PBT having an intrinsic viscosity of less than 1.0 deciliters per gram (dl/g) and a low flow PBT having an intrinsic viscosity of at least 1.0 dl/g. Intrinsic viscosity may be measured in a 60:40 phenol/tetrachloroethane mixture in accordance with ASTM D2857. In some aspects the high flow PBT has an intrinsic viscosity of less than 0.95 dl/g, or less than 0.9 dl/g, or less than 0.85 dl/g, or less than 0.8 dl/g, or less than 0.75 dl/g, or less than 0.7 dl/g, or about 0.66 dl/g. In further aspects the low flow PBT has an intrinsic viscosity of at least 1.05 dl/g, or at least 1.10 dl/g, or at least 1.15 dl/g, or about 1.2 dl/g.

In specific aspects the composition includes a high flow PBT (e.g., PBT195) and a low flow PBT (e.g., PBT315) in a ratio of from 100 to 1 (100:1) to 1 to 2 (1:2), such as but not limited to, 100:1 (high flow PBT to low flow PBT), 95:1, 90:1, 85:1, 80:1, 75:1, 70:1, 65:1, 60:1, 55:1, 50:1, 45:1, 40:1, 35:1, 30:1, 25:1, 20:1, 15:1, 10:1, 5:1, 4.5:1, 4:1, 3.5:1, 3:1, 2.5:1, 2:1, 1.5:1, 1:1, 0.9:1, 0.8:1, 0.7:1, 0.6:1, 0.5:1, 0.4:1, 0.3:1, 0.2:1, 0.1:1, 0.05:1, or 0.01:1. Ranges selected from these ratios are also possible. In specific aspects the composition includes a high flow PBT and does not include a low flow PBT (e.g., 100% high flow PBT).

Compositions according to aspects of the disclosure include from about 10 wt% to about 40 wt% of the PBT component. In some aspects the compositions include at least 10 wt%, or at least 11 wt%, or at least 12 wt%, or at least 13 wt%, or at least 14 wt%, or at least 15 wt%, or at least 16 wt%, or at least 17 wt%, or at least 18 wt%, or at least 19 wt%, or at least 20 wt%, or at least 21 wt%, or at least 22 wt%, or at least 23 wt%, or at least 24 wt%, or at least 25 wt%, or at least 26 wt%, or at least 27 wt%, or at least 28 wt%, or at least 29 wt%, or at least 30 wt%, or at least 31 wt%, or at least 32 wt%, or at least 33 wt%, or at least 34 wt%, or at least 35 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, or at most 30 wt%, or at most 29 wt%, or at most 28 wt%, or at most 27 wt%, or at most 26 wt%, or at most 25 wt%, or at most 24 wt%, or at most 23 wt%, of the PBT component.

The thermoplastic composition includes from about 5 wt% to less than 10 wt% of a glass fiber component in some aspects. The glass fiber may be selected from E-glass, S-glass, AR-glass, T-glass, D-glass and R-glass. In a still further aspect, the glass fiber is selected from E-glass, S-glass, and combinations thereof. In a still further aspect, the glass fiber is one or more S-glass materials. High-strength glass is generally known as S-type glass in the United States, R-glass in Europe and T-glass in Japan. S-glass was originally developed for military applications in the 1960s, and a lower cost version, S-2 glass, was later developed for commercial applications. High-strength glass has appreciably higher amounts of silica oxide, aluminum oxide and magnesium oxide than E-glass. S-2 glass is approximately 40-70% stronger than E-glass. The glass fibers can be made by standard processes, e.g., by steam or air blowing, flame blowing, and mechanical pulling. Exemplary glass fibers for thermoplastic compositions of the present disclosure may be made by mechanical pulling.

The glass fibers may be sized or unsized. Sized glass fibers are coated on their surfaces with a sizing composition selected for compatibility with the polymeric base resin. The sizing composition facilitates wet-out and wet-through of the polymeric base resin upon the fiber strands and assists in attaining desired physical properties in the thermoplastic composition.

In various further aspects, the glass fiber is sized with a coating agent. In a further aspect, the coating agent is

present in an amount from about 0.1 wt% to about 5 wt% based on the weight of the glass fibers. In a still further aspect, the coating agent is present in an amount from about 0.1 wt% to about 2 wt% based on the weight of the glass fibers.

In preparing the glass fibers, a number of filaments can be formed simultaneously, sized with the coating agent and then bundled into what is called a strand. Alternatively, the strand itself may be first formed of filaments and then sized. The amount of sizing employed is generally that amount which is sufficient to bind the glass filaments into a continuous strand and ranges from about 0.1 to about 5 wt%, about 0.1 to 2 wt% based on the weight of the glass fibers. Generally, this may be about 1.0 wt% based on the weight of the glass filament.

In a further aspect, the glass fiber can be continuous or chopped. In a still further aspect, the glass fiber is continuous. In yet a further aspect, the glass fiber is chopped. Glass fibers in the form of chopped strands may have a length of about 0.3 millimeter (mm) to about 10 centimeters (cm), specifically about 0.5 mm to about 5 cm, and more specifically about 1.0 mm to about 2.5 cm. In various further aspects, the glass fiber has a length from about 0.2 mm to about 20 mm. In a yet further aspect, the glass fiber has a length from about 0.2 mm to about 10 mm. In an even further aspect, the glass fiber has a length from about 0.7 mm to about 7 mm. In this area, where a thermoplastic resin is reinforced with glass fibers in a composite form, fibers having a length of about 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from about 1 to about 15 μm. In an even further aspect, the diameter of the glass fiber is from about 4 to about 10 μm. In a still further aspect, the diameter of the glass fiber is from about 1 to about 10 μm. In a still further aspect, the glass fiber has a diameter from about 7 μm to about 10 μm.

In some aspects the glass fiber is a bonding or a non-bonding glass fiber. In specific aspects the glass fiber is a non-bonding glass fiber. The term "non-bonding" refers to the fact that the glass fibers do not adhere to the polymeric ingredients in the PBT composition, whereas "bonding" glass fibers adhere strongly to the polymeric ingredients. The non-bonding/bonding characteristics of the glass fibers can be controlled, for example, by coating the glass fibers with coatings such as an epoxy coating, polyvinyl acetate, particular polyester resins, starch, acrylic resins, melamine, polyvinyl chloride, polyethylene oxide, polyurethane, polyepoxide, or polyvinyl alcohol, or a silane coupling agent, to change the bonding properties between the glass fibers and the other polymeric ingredients in the PBT composition. In some aspects non-bonding glass fibers provide improved impact strength compared to bonding glass fibers or milled glass fibers.

In certain aspects the thermoplastic composition includes at least 5 wt%, or at least 5.5 wt%, or at least 6 wt%, or at least 6.5 wt%, or at least 7 wt%, or at least 7.5 wt%, or at least 8 wt%, or at least 8.5 wt%, or at least 9 wt%, or at most 10 wt%, or at most 9.5 wt%, or at most 9 wt%, or at most 8.5 wt%, or at most 8 wt%, or at most 7.5 wt%, of the glass fiber component.

Compositions according to aspects of the disclosure include from about 30 wt% to about 75 wt% of a mineral filler component including aluminum silicate, aluminum oxide, magnesium oxide, or a combination thereof. In certain aspects the composition includes at least 30 wt%, or at least 35 wt%, or at least 40 wt%, or at least 45 wt%, or at least 50 wt%, or at least 55 wt%, or at least 60 wt%, or at least 65 wt%, or at most 75 wt%, or at most 70 wt%, or at most 65 wt%, or at most 60 wt%, or at most 55 wt%, of the mineral filler component.

In further aspects the composition includes from about 0.1 wt% to about 10 wt% of an impact modifier component including ethylene-ethyl acrylate copolymer (EEA) and ethylene-methyl acrylate-glycidyl methacrylate terpolymer (EMAGMA). An exemplary EEA copolymer is ELVALOY™ AC 2615 acrylate copolymer, available from DuPont Performance Materials. An exemplary EMAGMA copolymer is Lotader® AX8900, available from SK Functional Polymer.

In certain aspects the composition includes at least 0.1 wt%, or at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at least 1.5 wt%, or at least 2 wt%, or at least 2.5 wt%, or at least 3 wt%, or at least 3.5 wt%, or at least 4 wt%, or at least 4.5 wt%, or at least 5 wt%, or at most 10 wt%, or at most 9.5 wt%, or at most 9 wt%, or at most 8.5 wt%, or at most 8 wt%, or at most 7.5 wt%, or at most 7 wt%, or at most 6.5 wt%, or at most 6 wt%, or at most 5.5 wt%, or at most 5 wt%, or at most 4.5 wt%, or at most 4 wt%, or at most 3.5 wt%, or at most 3 wt%, or at most 2.5 wt%, or at most 2 wt%, or at most 1.5 wt%, or at most 1 wt%, of the impact modifier component.

In specific aspects the composition includes from about 0.4 wt% to about 3.5 wt% of the EEA impact modifier. In further aspects the composition includes at most 3.5 wt%, or at most 3 wt%, or at most 2.5 wt%, or at most 2 wt%, or at most 1.5 wt%, or at most 1 wt%, of the EEA impact modifier.

In certain aspects the composition includes from about 0.5 wt% to about 3 wt% of the EMAGMA impact modifier. In other aspects the composition includes at most 3 wt%, or at most 2.5 wt%, or at most 20 wt%, or at most 1.5 wt%, of the EMAGMA impact modifier.

In some aspects the impact modifier component further includes from 0.1 wt% to about 9 wt% of a polybutylene tere/iso phthalate-co-polyoxybutylene impact modifier. An exemplary polybutylene tere/iso phthalate-co-polyoxybutylene impact modifier is Hytrel®, available from DuPont. In specific aspects the composition includes at most 9 wt%, or at most

8.5 wt%, or at most 8 wt%, or at most 7.5 wt%, or at most 7 wt%, or at most 6.5 wt%, or at most 6 wt%, or at most 5.5 wt%, or at most 5 wt%, or at most 4.5 wt%, or at most 4 wt%, or at most 3.5 wt%, or at most 3 wt%, or at most 2.5 wt%, or at most 2 wt%, of the polybutylene tere/iso phthalate-co-polyoxybutylene impact modifier.

In further aspects the composition further includes from about 0.1 wt% to about 15 wt% of a polycarbonate siloxane copolymer. In some aspects the composition includes at least 0.2 wt%, or at least 0.3 wt%, or at least 0.4 wt%, or at least 0.5 wt%, or at least 0.6 wt%, or at least 0.7 wt%, or at least 0.8 wt%, or at least 0.9 wt%, or at least 1 wt%, or at least 1.5 wt%, or at least 2 wt%, or at least 2.5 wt%, or at least 3 wt%, or at least 3.5 wt%, or at least 4 wt%, or at least 4.5 wt%, or at least 5 wt%, or at least 6 wt%, or at least 7 wt%, or at least 8 wt%, or at least 9 wt%, or at least 10 wt%, or at most 15 wt%, or at most 14 wt%, or at most 13 wt%, or at most 12 wt%, or at most 11 wt%, or at most 10 wt%, or at most 9 wt%, or at most 8wt%, or at most 7 wt%, or at most 6 wt%, or at most 5 wt%, of the polycarbonate siloxane copolymer.

In certain aspects the polycarbonate siloxane copolymer has a siloxane content of from about 15 wt% to about 45 wt%, based on the total weight of the polycarbonate siloxane copolymer component. In further aspects the polycarbonate siloxane copolymer has a siloxane content of from about 15-25 wt% or from about 18-22 wt% (e.g., opaque EXL available from SABIC having a siloxane content of about 20 wt%), and/or from about 35-45 wt% (such as a 40 wt% siloxane copolymer available from SABIC). In specific aspects the polycarbonate siloxane copolymer has a siloxane content of from about 35-40 wt%, or from about 38-42 wt%, or about 40 wt%.

In specific aspects the compositions according to aspects of the disclosure do not include a polycarbonate copolymer other than the polycarbonate siloxane copolymer described herein. The inclusion of other conventional polycarbonate copolymers-including but not limited to PC copolymers including (1) bisphenol-A (PC) monomer units and isophthalate-terephthalate-resorcinol (ITR) ester units (e.g., SLX PC copolymer), and (2) high flow ductile PC copolymer including sebacic acid monomer units and bisphenol-A monomer units (e.g., HFD PC copolymer)-could prevent the composition from having desired properties, such as but not limited to a CTI rating of PLC-0, bulk thermal conductivity and HDT properties.

Compositions according to aspects of the disclosure may include at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, a blowing agent, a reinforcing agent, or a combination thereof.

In some aspects thermoplastic compositions described herein have a tensile elongation at break of at least 1.2% as determined in accordance with ISO 527. In further aspects the composition has a tensile elongation at break of at least 1.3%, or at least 1.4%, or at least 1.5%, or at least 1.6%, or at least 1.7%, or at least 1.8%, or at least 1.9%, or at least 2%, or at least 2.1%, or at least 2.2%, or at least 2.3%, or at least 2.4%, as determined in accordance with ISO 527.

In certain aspects the composition has a tensile modulus of at least 6 gigapascals (GPa) as determined in accordance with ISO 527. In further aspects the composition has a tensile modulus of at least 6.5 GPa, or at least 7 GPa, or at least 7.5 GPa, or at least 8 GPa, or at least 8.5 GPa, or at least 9 GPa, or at least 9.5 GPa, or at least 10 GPa, or at least 10.5 GPa, or at least 11 GPa, or at least 11.5 GPa as determined in accordance with ISO 527.

Compositions according to aspects of the disclosure may have an unnotched Izod impact strength (UNII) of at least 20 $KJ/m^2$ at 23 °C as determined in accordance with ISO 180/1U. In other aspects the composition has an UNII of at least 20.5 $KJ/m^2$, or at least 21 $KJ/m^2$, or at least 21.5 $KJ/m^2$, or at least 22 $KJ/m^2$, or at least 22.5 $KJ/m^2$, or at least 23 $KJ/m^2$, or at least 23.5 $KJ/m^2$, or at least 24 $KJ/m^2$, or at least 24.5 $KJ/m^2$, or at least 25 $KJ/m^2$, or at least 25.5 $KJ/m^2$, or at least 26 $KJ/m^2$, or at least 26.5 $KJ/m^2$, at 23 °C as determined in accordance with ISO 180/1U.

In some aspects the composition has a bulk thermal conductivity (TC) of at least 0.9 W/mK, or at least 1.0 W/mK, or at least 1.1 W/mK, or at least 1.2 W/mK, or at least 1.3 W/mK, or at least 1.4 W/mK, or at least 1.5 W/mK, or at least 1.6 W/mK, or at least 1.7 W/mK, or at least 1.8 W/mK, or at least 1.9 W/mK, or at least 2.0 W/mK. ISO22007-2 describes the determination of thermal conductivity and thermal diffusivity using a transient plane heat source (Hot Disc). In principle either a bulk thermal conductivity or an isotropic measurement is described according to this procedure. According to the present disclosure bulk thermal conductivity is measured according to an anisotropic technique in Watts per meter-Kelvin (W/mK) according to ISO22007-2 and the equation:

$$\text{TCBulk}=\sqrt{(TCtp \times TCip)},$$

where TCBulk = Bulk thermal conductivity, TCtp= Through-plane thermal conductivity (W/mK); and TCip=In-plane thermal conductivity (W/mK).

In further aspects the composition has a heat deflection temperature (HDT) of at least 150 °C, or at least 155 °C, or at least 160 °C, or at least 165 °C, or at least 170 °C, or at least 175 °C, or at least 180 °C, or at least 185 °C, or at least 190 °C, as determined in accordance with ISO 75/Af using a 1.8 MPa load.

In yet further aspects the composition has a comparative tracking index (CTI) rating of PLC-0 as determined in accordance with UL746A. In particular aspects the composition has a CTI rating of PLC-1 as determined in accordance

with UL746A, or in certain aspects has a CTI rating of PLC-2 as determined in accordance with UL746A. A PLC-0 rating means that the composition has a passing CTI rating at 300V, 400V and 600V as determined in accordance with UL746A. A PLC-1 rating means that the composition has a passing CTI rating at 300V and 400V as determined in accordance with UL746A. A PLC-2 rating means that the composition has a passing CTI rating at 300V as determined in accordance with UL746A.

**Methods of Manufacture**

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In specific aspects, the article is a radar component or a high voltage component.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

a. from about 10 wt% to about 40 wt% of a PBT (polybutylene terephthalate) component;
b. from about 5 wt% to less than 10 wt% of a glass fiber component;
c. from about 30 wt% to about 75 wt% of a mineral filler component comprising aluminum silicate, aluminum oxide, magnesium oxide, or a combination thereof;
d. from about 0.1 wt% to about 10 wt% of an impact modifier component comprising ethylene-ethyl acrylate copolymer

(EEA) and ethylene-methyl acrylate-glycidyl methacrylate terpolymer (EMAGMA); and
e. optionally a polycarbonate-siloxane copolymer component,

wherein the combined weight percent value of all components does not exceed 100 wt%, and all weight percent values are based on the total weight of the composition, and wherein the composition does not comprise a polycarbonate copolymer other than the optional polycarbonate-siloxane copolymer in element (e).

Aspect 2. The thermoplastic composition according to Aspect 1, wherein the PBT component comprises a high flow PBT having an intrinsic viscosity of less than 1.0 deciliters per gram (dl/g) and a low flow PBT having an intrinsic viscosity of at least 1.0 dl/g, wherein intrinsic viscosity is measured in a 60:40 phenol/tetrachloroethane mixture in accordance with ASTM D2857.

Aspect 3. The thermoplastic composition according to Aspect 2, wherein the composition comprises the high flow PBT and the low flow PBT in a ratio of from 2:1 to 1:2.

Aspect 4. The thermoplastic composition according to any of Aspects 1 to 3, wherein the glass fiber component comprises a round glass fiber.

Aspect 5. The thermoplastic composition according to any of Aspects 1 to 4, wherein the composition comprises from about 50 wt% to about 70 wt% of the mineral filler component.

Aspect 6. The thermoplastic composition according to any of Aspects 1 to 5, wherein the composition comprises from about 0.4 wt% to about 3.5 wt% of the EEA impact modifier.

Aspect 7. The thermoplastic composition according to any of Aspects 1 to 6, wherein the composition comprises from about 0.5 wt% to about 3 wt% of the EMAGMA impact modifier.

Aspect 8. The thermoplastic composition according to any of Aspects 1 to 7, wherein the impact modifier component further comprises from 0.1 wt% to about 9 wt% of a polybutylene tere/iso phthalate-co-polyoxybutylene impact modifier.

Aspect 9. The thermoplastic composition according to any of Aspects 1 to 8, wherein the composition further comprises from about 0.1 wt% to about 15 wt% of a polycarbonate siloxane copolymer.

Aspect 10. The thermoplastic composition according to Aspect 9, wherein the polycarbonate siloxane copolymer has a siloxane content of from about 15 wt% to about 45 wt%.

Aspect 11. The thermoplastic composition according to any of Aspects 1 to 10, wherein the composition comprises at least one additional additive.

Aspect 12. The thermoplastic composition according to Aspect 11, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, a blowing agent, a reinforcing agent, or a combination thereof.

Aspect 13. The thermoplastic composition according to any of Aspects 1 to 12, wherein the composition comprises a tensile elongation at break of at least 1.2% as determined in accordance with ISO 527.

Aspect 14. The thermoplastic composition according to any of Aspects 1 to 13, wherein the composition comprises a tensile modulus of at least 6 gigapascals (GPa) as determined in accordance with ISO 527.

Aspect 15. The thermoplastic composition according to any of Aspects 1 to 14, wherein the composition comprises an unnotched Izod impact strength (UNII) of at least 20 $KJ/m^2$ at 23 °C as determined in accordance with ISO 180/1U.

Aspect 16. The thermoplastic composition according to any of Aspects 1 to 15, wherein the composition comprises a bulk thermal conductivity (TC) of at least 0.9 W/mK as measured according to an anisotropic technique in Watts per meter-Kelvin (W/mK) according to ISO22007-2.

Aspect 17. The thermoplastic composition according to any of Aspects 1 to 16, wherein the composition comprises a heat deflection temperature (HDT) of at least 150 °C as determined in accordance with ISO 75/Af using a 1.8 MPa load.

Aspect 18. The thermoplastic composition according to any of Aspects 1 to 17, wherein the composition comprises a comparative tracking index (CTI) rating of PLC-0, or PLC-1, and/or PLC-2, as determined in accordance with UL746A.

Aspect 19. An article comprising the thermoplastic composition according to any of Aspects 1 to 18.

Aspect 20. The article according to Aspect 19, wherein the article is a radar component or a high voltage component.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to

ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Components used in one or more of the compositions described herein are listed in Table 1:

**Table 1 - Components**

| Component | Description | Source |
|---|---|---|
| PBT1 | Polybutylene terephthalate resin, PBT195, high flow PBT, intrinsic viscosity of 0.66 dl/g as measured in a 60:40 phenol/tetrachloroethane mixture, 53400 g/mol of weight-average molecular weight measured in 5/95 volume % hexafluoroisopropyl alcohol/chloroform solution by gel permeation chromatography with polystyrene standards | SABIC |
| PBT2 | Polybutylene terephthalate resin, PBT315, low flow PBT, intrinsic viscosity of 1.2 dl/g as measured in a 60:40 phenol/tetrachloroethane mixture, 104000 g/mol of weight-average molecular weight measured in 5/95 volume % hexafluoroisopropyl alcohol/chloroform solution by gel permeation chromatography with polystyrene standards | SABIC |
| IQ PBT | High intrinsic viscosity (IV) chemically recycled PBT resin formed from SABIC's IQ process; derived from post-consumer recycled polyethylene terephthalate (r-PET) | SABIC |
| SLX PC Copolymer | Polycarbonate copolymer including 90 wt% bisphenol-A (PC) monomer units and 10 wt% isophthalate-terephthalate-resorcinol (ITR) ester units | SABIC |
| HFD PC Copolvmer | High flow ductile PC copolymer including sebacic acid monomer units and bisphenol-A monomer units | SABIC |
| PETS | Pentaerythritol tetrastearate, mold release | |
| AO1010 | Antioxidant 1010 | |
| AX8900 | Lotader® AX8900, ethylene-methyl acrylate-glycidyl methacrylate terpolymer (EMAGMA), impact modifier | |
| EEA | Ethylene-ethylacrylate copolymer, impact modifier | |
| Hytrel® | Polybutylene tere/iso phthalate-co-polyoxybutylene, impact modifier | |
| MZP | Mono-zinc phosphate, zinc salt | |
| PC-Si (40) | Polycarbonate-siloxane copolymer with 40 wt% siloxane content | SABIC |
| AlS | Aluminum Silicate, filler | |
| AlO | Aluminum Oxide, filler | |
| GF | Reinforcing fiber. Glass fiber, round, approximately 10 micron (μm) with a chop length of 4 millimeters (mm) | |

Compositions were prepared by mixing the components, extruding them into pellets, and molding them into samples for testing. Typical extrusion conditions are set forth in Table 2:

**Table 2 - Extrusion conditions**

| Description | Unit | Quantity |
|---|---|---|
| Drying time | h | 2 |
| Drying temp | °C | 120 |
| Hopper temp | °C | 40 |
| Zone 1 temp | °C | 200 |
| Zone 2 temp | °C | 220 |

(continued)

| Description | Unit | Quantity |
|---|---|---|
| Zones 3-9 temp | °C | 260 |
| Screw speed | rpm | 300 |

Typical molding conditions are set forth in Table 3:

**Table 3 - Molding conditions**

| Description | Unit | Quantity |
|---|---|---|
| Drying time | h | 2-3 |
| Drying temp | °C | 120 |
| Hopper temp | °C | 40 |
| Zone 1 temp | °C | 250-260 |
| Zone 2 temp | °C | 260-270 |
| Zone 3 temp | °C | 270-280 |
| Nozzle temp | °C | 265-275 |
| Mold temp | °C | 80-100 |
| Back pressure | bar | 5-7 |
| Screw speed | RPM | 60-100 |

Aluminum-silicate based compositions were prepared according to Table 4A:

**Table 4A - PBT Compositions with thermally conductive Aluminum Silicate filler**

| Component | AIS1 | AIS2 | AIS3 | AIS4 | AIS5 | AIS6 | AIS7 | AIS8 | AIS9 | AIS10 |
|---|---|---|---|---|---|---|---|---|---|---|
| PBT1 | 24.1 | 21.85 | 19.2 | 18.7 | 21.21 | 19.2 | 21.93 | 20.8 | 29.5 | 19.56 |
| PBT2 | 10 | 9.1 | 7.9 | 7.8 | 9 | 8 | 9.3 | 8.7 | | 8.2 |
| PETS | 0.2 | 0.2 | 0.2 | 0.2 | 0.2 | 0.2 | 0.2 | 0.2 | 0.2 | 0.2 |
| AO1010 | 0.1 | 0.1 | 0.1 | 0.1 | 0.1 | 0.1 | 0.1 | 0.1 | 0.1 | 0.1 |
| AX 8900 | 0.6 | 1.5 | | 0.6 | 1.5 | 3 | | | | |
| EEA | | 1 | | | 1.74 | 2 | | | | |
| Hytrel® | | 1.25 | | | 1.25 | 2.5 | 3.47 | 5.2 | 5.2 | 6.94 |
| MZP | | | 0.1 | 0.1 | | | | | | |
| PC-Si (40) | | | 7.5 | 7.5 | | | | | | |
| AIS | 57.5 | 57.5 | 57.5 | 57.5 | 57.5 | 57.5 | 57.5 | 57.5 | 57.5 | 57.5 |
| GF | 7.5 | 7.5 | 7.5 | 7.5 | 7.5 | 7.5 | 7.5 | 7.5 | 7.5 | 7.5 |
| **Total** | **100** | **100** | **100** | **100** | **100** | **100** | **100** | **100** | **100** | **100** |

Aluminum-oxide based compositions were prepared according to Table 4B:

**Table 4B - PBT Composition with thermally conductive Aluminum oxide filler**

| Component | AIO1 | AIO2 | AIO3 | AIO4 | AIO5 | AIO6 | AIO7 | AIO8 | AIO9 | AIO10 | AIO11 |
|---|---|---|---|---|---|---|---|---|---|---|---|
| PBT1 | 21.6 | 20.4 | 16.1 | 15.8 | 15.6 | 21.7 | 20.8 | 25 | 18.3 | 12.1 | 11.1 |
| PBT2 | 10.5 | 8.55 | 16 | 15.8 | 15.5 | 9 | 8.6 | 12.5 | 9 | 12.1 | 11 |

(continued)

| Component | AIO1 | AIO2 | AIO3 | AIO4 | AIO5 | AIO6 | AIO7 | AIO8 | AIO9 | AIO10 | AIO11 |
|---|---|---|---|---|---|---|---|---|---|---|---|
| PETS | 0.2 | 0.2 | 0.2 | 0.2 | 0.2 | 0.2 | 0.2 | 0.2 | 0.2 | 0.2 | 0.2 |
| AO1010 | 0.1 | 0.1 | 0.1 | 0.1 | 0.1 | 0.1 | 0.1 | 0.1 | 0.1 | 0.1 | 0.1 |
| AX 8900 | 0.6 | 1.5 | 0.6 | 0.6 | 0.6 | 0.6 | 0.6 | 0.6 | 0.6 | 0.6 | 1.5 |
| EEA | | 1 | 1 | 1.5 | 2 | 2.5 | 3.5 | | | 2 | 1 |
| Hytrel® | | 1.25 | | | | | | | | | 1.25 |
| AIO | 59.5 | 59.5 | 57.5 | 57.5 | 57.5 | 58.4 | 58.7 | 54.1 | 64.4 | 64.4 | 66.35 |
| GF | 7.5 | 7.5 | 8.5 | 8.5 | 8.5 | 7.5 | 7.5 | 7.5 | 8.5 | 8.5 | 7.5 |
| **Total** | **100** | **100** | **100** | **100** | **100** | **100** | **100** | **100** | **100** | **100** | **100** |

Properties of the Table 4A and Table 4B compositions are set forth in Tables 5A and 5B, respectively:

**Table 5A - Properties of Table 4A Compositions (Aluminum Silicate)**

| Properties | AIS1 | AIS2 | AIS3 | AIS4 | AIS5 | AIS6 | AIS7 | AIS8 | AIS9 | AIS10 |
|---|---|---|---|---|---|---|---|---|---|---|
| Tensile Strength (MPa) | 72 | 60 | 64 | 63 | 54 | 50 | 63 | 55 | 56 | 49 |
| Elongation at Break (%) | 1.3 | 1.8 | 1.6 | 1.7 | 2.4 | 2.4 | 1.36 | 1.32 | 1.36 | 1.32 |
| Tensile Modulus (GPa) | 11.0 | 8.1 | 9.9 | 9.6 | 6.8 | 5.7 | 9.5 | 8.5 | 8.5 | 7.5 |
| UNII (KJ/m2) | 18.6 | 21.3 | 20.4 | 19.0 | 23.5 | 26.9 | 19.4 | 19.3 | 18.8 | 19.3 |
| Bulk TC (W/mK) | 1.0 | 1.0 | | | | | | | | |
| HDT (°C) | 189 | 182 | 173 | 172 | 158 | 159 | 172 | 170 | 168 | 154 |
| CTI at 300V | Pass | Pass | | | Pass | Pass | | | | |
| CTI at 400V | Pass | Pass | | | Pass | Pass | | | | |
| CTI at 600V | Fail | Fail | | | Pass | Pass | | | | |

**Table 5B - Properties of Table 4B Compositions (Aluminum Oxide)**

| Properties | AIO1 | AIO2 | AIO3 | AIO4 | AIO5 | AIO6 | AIO7 | AIO8 | AIO9 | AIO10 | AIO11 |
|---|---|---|---|---|---|---|---|---|---|---|---|
| Tensile Strength (MPa) | 74.4 | 64.3 | 72.6 | 64.5 | 66.2 | 60.7 | 49.0 | 74.0 | 71.9 | 66.4 | 57.5 |
| Elongation at Break (%) | 1.7 | 2.2 | 1.9 | 1.4 | 1.8 | 2.0 | 1.1 | 2.0 | 1.5 | 1.7 | 2.12 |
| Tensile Modulus (GPa) | 10.3 | 8.0 | 8.9 | 8.6 | 8.3 | 7.5 | 7.3 | 8.9 | 11.5 | 9.4 | 7.6 |
| UNII (KJ/m2) | 21.3 | 24.5 | 22.7 | 15.4 | 21.8 | 19.2 | 19.8 | 26.5 | 20.5 | 22.8 | 24.5 |
| Bulk TC (W/mK) | 1.1 | 1.0 | | | | | | 0.9 | 1.4 | | |
| HDT (°C) | 180 | 166 | 177 | 170 | 172 | 169 | 151 | 188 | 170 | 159 | 161 |
| CTI at 300V | Pass | Pass | | | | | | Pass | | | |
| CTI at 400V | Pass | Pass | | | | | | Pass | | | |
| CTI at 600V | Fail | Pass | | | | | | Fail | | | |

Tensile strength, tensile elongation at break, and tensile modulus were evaluated in accordance with ISO 527. Unnotched Izod impact strength (UNII) was evaluated at 23 °C in accordance with ISO 180/1U. Heat deflection temperature (HDT) was evaluated in accordance with ISO 75/Af using a 1.8 MPa load. Comparative Tracking Index (CTI) was evaluated at the indicated voltage in accordance with UL746A. A "Pass" rating is assigned when the number of drops (average) at the specific voltage is 100. A "Fail" rating is assigned when the average number of drops is less than 100.

Bulk thermal conductivity is measured according to an anisotropic technique in Watts per meter-Kelvin (W/mK)

according to ISO22007-2 and the equation:

$$TCBulk=\sqrt{(TCtp \times TCip)},$$

where TCBulk = Bulk thermal conductivity, TCtp= Through-plane thermal conductivity (W/mK); and TCip=In-plane thermal conductivity (W/mK).

Articles formed from compositions according to aspects of the disclosure have one or more of the following properties: tensile strength of at least 50 megapascals (MPa); tensile elongation at break at least 1.2%; tensile modulus at least 6 gigapascals (GPa); UNII at least 20 KJ/$m^2$; bulk TC at least 0.9 W/mK; HDT of at least 150 °C; and a passing CTI rating at 300V, 400V and/or 600V as determined in accordance with UL746A. Such articles may be suitable for use in applications such as, but not limited to, high voltage connectors and radar back covers.

CTI data for the compositions is not yet available, but it is expected that the Table 4A and Table 4B compositions that included the EMAGMA and EEA impact modifier would have a passing CTI rating at 300V, 400V and/or 600V as determined in accordance with UL746A. Additionally, compositions including the polybutylene tere/iso phthalate-co-polyoxybutylene impact modifier (Hytrel®) are expected to have improved melt flow properties. A reinforcing fiber (glass fiber) was added to improve HDT properties of the compositions, but without the proper impact modifier component the compositions will not satisfy the desired passing CTI rating at 600V. Addition of too much of an impact modifier such as EEA causes the mechanical properties to decrease. While the best overall performance was observed with compositions including ethylene-ethyl acrylate copolymer (EEA), ethylene-methyl acrylate-glycidyl methacrylate terpolymer (EMAGMA), and polybutylene tere/iso phthalate-co-polyoxybutylene impact modifier (Hytrel®), compositions including just EEA and EMAGMA had suitable properties for many applications.

Comparative compositions including other polycarbonate copolymers and/or another type of PBT (IQ PBT) were prepared and tested as shown in Tables 6 and 7:

**Table 6 - Comparative Compositions**

| Component | C1 | C2 | C3 | C4 | C5 |
|---|---|---|---|---|---|
| PBT1 | 20.4 | 22.45 | 22.95 | 22.95 | 22.95 |
| PBT2 | 8.55 | 7.5 | | 10 | 9.9 |
| IQ PBT | | | 10 | | |
| SLX PC Copolymer | | 10 | | | |
| HFD PC Copolymer | 10 | | 12 | 12 | 12 |
| PETS | 0.2 | 0.1 | 0.1 | 0.2 | 0.2 |
| AO1010 | 0.1 | 0.1 | 0.1 | 0.1 | 0.1 |
| MZP | | 0.1 | 0.1 | 0.1 | 0.1 |
| AX8900 | 1.5 | 1.5 | 1.5 | 1.5 | 1.5 |
| EEA | 1 | 1 | 1 | 1 | 1 |
| Hytrel® | 1.25 | 1.25 | 1.25 | 1.25 | 1.25 |
| AlO | 46 | 45 | 51 | 50.9 | 51 |
| GF | 11 | 11 | | | |
| **Total** | **100** | **100** | **100** | **100** | **100** |

Properties of comparative compositions:

**Table 7 - Properties of Table 6 Compositions**

| Property | C1 | C2 | C3 | C4 | C5 |
|---|---|---|---|---|---|
| CTI at 300V | Pass | Pass | Pass | Pass | Pass |
| CTI at 400V | Fail | Fail | Pass | Pass | Pass |
| CTI at 600V | Fail | Fail | Fail | Pass | Fail |

(continued)

| Property | C1 | C2 | C3 | C4 | C5 |
|---|---|---|---|---|---|
| Bulk TC (W/mK) | 0.67 | 0.67 | 0.65 | 0.65 | 0.65 |
| HDT (°C) | 100 | 104 | 71 | 74 | 74 |

None of the comparative compositions including other PC copolymers satisfy the desired bulk TC (at least 0.9 W/mK) and HDT (at least 150 °C) requirements. Additionally, only composition C4 has a passing CTI rating at 300V, 400V and 600V (i.e., a PLC-0 rating) as determined in accordance with UL746A.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   a. from about 10 wt% to about 40 wt% of a PBT (polybutylene terephthalate) component;
   b. from about 5 wt% to less than 10 wt% of a glass fiber component;
   c. from about 30 wt% to about 75 wt% of a mineral filler component comprising aluminum silicate, aluminum oxide, magnesium oxide, or a combination thereof;
   d. from about 0.1 wt% to about 10 wt% of an impact modifier component comprising ethylene-ethyl acrylate copolymer (EEA) and ethylene-methyl acrylate-glycidyl methacrylate terpolymer (EMAGMA); and
   e. optionally a polycarbonate-siloxane copolymer component,

   wherein the combined weight percent value of all components does not exceed 100 wt%, and all weight percent values are based on the total weight of the composition, and
   wherein the composition does not comprise a polycarbonate copolymer other than the optional polycarbonate-siloxane copolymer in element (e).

2. The thermoplastic composition according to claim 1, wherein the PBT component comprises a high flow PBT having an intrinsic viscosity of less than 1.0 deciliters per gram (dl/g) and a low flow PBT having an intrinsic viscosity of at least 1.0 dl/g, wherein intrinsic viscosity is measured in a 60:40 phenol/tetrachloroethane mixture in accordance with ASTM D2857.

3. The thermoplastic composition according to claim 1 or 2, wherein the composition comprises from about 50 wt% to about 70 wt% of the mineral filler component.

4. The thermoplastic composition according to any of claims 1 to 3, wherein the composition comprises from about 0.4 wt% to about 3.5 wt% of the EEA impact modifier.

5. The thermoplastic composition according to any of claims 1 to 4, wherein the composition comprises from about 0.5 wt% to about 3 wt% of the EMAGMA impact modifier.

6. The thermoplastic composition according to any of claims 1 to 5, wherein the impact modifier component further comprises from 0.1 wt% to about 9 wt% of a polybutylene tere/iso phthalate-co-polyoxybutylene impact modifier.

7. The thermoplastic composition according to any of claims 1 to 6, wherein the composition further comprises from about 0.1 wt% to about 15 wt% of a polycarbonate siloxane copolymer having a siloxane content of from about 15 wt% to about 45 wt%.

8. The thermoplastic composition according to any of claims 1 to 7, wherein the composition comprises at least one additional additive comprising an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, a blowing agent, a reinforcing agent, or a combination thereof.

9. The thermoplastic composition according to any of claims 1 to 8, wherein the composition comprises a tensile elongation at break of at least 1.2% as determined in accordance with ISO 527.

10. The thermoplastic composition according to any of claims 1 to 9, wherein the composition comprises a tensile modulus of at least 6 gigapascals (GPa) as determined in accordance with ISO 527.

11. The thermoplastic composition according to any of claims 1 to 10, wherein the composition comprises an unnotched Izod impact strength (UNII) of at least 20 $KJ/m^2$ at 23 °C as determined in accordance with ISO 180/1U.

12. The thermoplastic composition according to any of claims 1 to 11, wherein the composition comprises a bulk thermal conductivity (TC) of at least 0.9 W/mK as measured according to an anisotropic technique in Watts per meter-Kelvin (W/mK) according to ISO22007-2.

13. The thermoplastic composition according to any of claims 1 to 12, wherein the composition comprises a heat deflection temperature (HDT) of at least 150 °C as determined in accordance with ISO 75/Af using a 1.8 MPa load.

14. The thermoplastic composition according to any of claims 1 to 13, wherein the composition comprises a comparative tracking index (CTI) rating of PLC-0 in accordance with UL746A.

15. An article comprising the thermoplastic composition according to any of claims 1 to 14, wherein the article is a radar component or a high voltage component.

Europäisches Patentamt
European Patent Office
Office européen des brevets

# EUROPEAN SEARCH REPORT

Application Number
EP 24 16 0425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 841 093 A (HEILONGJIANG XINDA ENTPR GROUP CO LTD) 27 March 2018 (2018-03-27)<br>* example 1 *<br>* claims 1-7 *<br>----- | 1-15 | INV.<br>C08L67/02 |
| A | US 2021/032459 A1 (MONIRUZZAMAN MOHAMMAD [US] ET AL) 4 February 2021 (2021-02-04)<br>* claims 1-20 *<br>* examples 1-3 *<br>----- | 1-15 | |
| A | US 4 296 021 A (WAMBACH ALLEN D) 20 October 1981 (1981-10-20)<br>* claims 1-12 *<br>* examples 1-3 *<br>----- | 1-15 | |

TECHNICAL FIELDS SEARCHED (IPC)
C08K
C08L

The present search report has been drawn up for all claims

| Place of search | Date of completion of the search | Examiner |
|---|---|---|
| The Hague | 19 June 2024 | Pouilley, Delphine |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 0425

This annex lists the patent family members relating to the patent documents cited in the above-mentioned European search report. The members are as contained in the European Patent Office EDP file on
The European Patent Office is in no way liable for these particulars which are merely given for the purpose of information.

19-06-2024

| Patent document cited in search report | Publication date | Patent family member(s) | Publication date |
|---|---|---|---|
| CN 107841093 A | 27-03-2018 | NONE | |
| US 2021032459 A1 | 04-02-2021 | CN 112004885 A | 27-11-2020 |
| | | EP 3775042 A1 | 17-02-2021 |
| | | KR 20200135990 A | 04-12-2020 |
| | | US 2021032459 A1 | 04-02-2021 |
| | | WO 2019199970 A1 | 17-10-2019 |
| US 4296021 A | 20-10-1981 | GB 1569345 A | 11-06-1980 |
| | | JP S5377245 A | 08-07-1978 |
| | | US 4296021 A | 20-10-1981 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 80-05-7